# EUROPEAN PATENT APPLICATION

(11) **EP 4 794 307 A1**
(43) Date of publication of application: **19.08.2026**
(21) Application number: 25158476.9
(22) Date of filing: 18.02.2025
(51) Int. Cl.: H04L 67/306, H04W 8/18, H04W 12/30, H04W 12/40, H04W 4/50

(54) **SECURE ELEMENT, METHOD AND SYSTEM FOR STORING PROFILE CONFIGURATIONS**

(71) Applicant: Giesecke+Devrient Mobile Security Germany GmbH, 81677 München (DE)
(72) Inventor: ALEJANDRE, German, 08820 Barcelona (ES); GARRIDO, Jose Antonio, 08820 Barcelona (ES); GIFRE, Clara, 08028 Barcelona (ES); PATIÑO, David, 08620 Barcelona (ES); RUAU, Federico, 08907 Barcelona (ES)
(74) Representative: Ter Meer Steinmeister & Partner

(57) **Abstract**

In an aspect of the disclosure, a secure element for communication securely over a communication network is provided. The secure element comprises a storage unit, in which a plurality of subscription profiles, each comprising a profile-specific content and a profile-generic content, and a list comprising a collection of distinct elements of the profile-generic content are stored. Each element includes an identifier. The profile-generic content of each of at least two subscription profiles stored in the storage unit includes elements of which only the respective identifier is stored in the storage unit. The secure element further comprises a processing unit which is configured to enable one of the plurality of subscription profiles and establish a secure connection based on the enabled subscription profile.

## Description

The present invention relates to a secure element in which subscription profile configurations are stored more efficiently. The present invention further relates to a corresponding method for storing a subscriber profile configuration, preferably for a mobile communication network, a system which is configured to execute the method, and a computer-readable medium storing instructions to execute the method.

Subscribing a secure element to a network usually is triggered by a subscription request of the owner of a terminal device in which the secure element is hosted to a network entity, e. g., a network operator. The network entity then orders a subscription profile or operator profile, in short: profile, at a subscription server, e. g., the enhanced Subscription Manager Data Preparator (SM-DP+) as specified by the norm SGP. 21 or SCP.22. Based on the profile, the secure element will be enabled to authenticate to the network entity. The subscription manager generates a profile package and typically secures the profile package as so-called bound profile package. The bound profile package comprises a session key agreement information between the subscriptions manager and the secure element that links the profile package to a specific secure element.

Typically, the bound profile package is downloaded to a device comprising the secure element or the secure element itself. The profile package comprises multiple profile elements, wherein a profile element may be a part of the profile package representing one or several features of the profile encoded using tag-length-value (TLV) structures based on the Abstract Syntax Notation One (ASN.1) description.

Upon installation of the profile package, a profile, more precisely a subscription profile, is generated. The profile may comprise a combination of a file structure, data and applications on the secure element.

The GSMA's subscription management defines the use of eSIM technology, which allows a user to store multiple operator profiles directly on his/her device, i. e., eUICC of the device. This approach eliminates the need for physical SIM cards, making it simpler and faster for users to switch between different network providers or manage multiple subscriptions through a single device, in particular in case of secure elements provided for IoT devices.

This benefit implies that a large amount of free memory in a secure element, is available to be able to allocate that number of profiles. The more memory is available in the secure element, the more profiles are storable at the same time therein. In some cases, however, especially for small secure elements, fulfilling such a memory requirement is challenging. In other words, given the constraints of storage capacity in secure elements, in particular in secure elements for IoT devices, which typically underlie an ongoing miniaturization, only a comparably small number of profiles may be installed at the same time in the secure element.

Thus, there is a need to at least partially reduce the storage space of profiles in a secure element. There is further a need to provide a secure element, in which multiple subscription profiles may be stored more efficiently. It is also an objective of the present invention to provide a method and a corresponding system for storing profiles on a secure element more efficiently.

At least one of the above technical objectives is solved by the features of any of the independent claims. Further advantageous embodiments are specified in the dependent claims.

In an aspect of the disclosure, a secure element for communication securely over a communication network is provided. The secure element comprises a storage unit, in which a plurality of subscription profiles, each comprising a profile-specific content and a profile-generic content, and a list comprising a collection of distinct elements of the profile-generic content are stored. Each element includes an identifier. The profile-generic content of each of at least two subscription profiles stored in the storage unit includes elements of which only the respective identifier is stored in the storage unit. The secure element further comprises a processing unit which is configured to enable one of the plurality of subscription profiles and establish a secure connection based on the enabled subscription profile.

In a further aspect of the disclosure, a method of installing a subscription profile in a secure element is provided. the method comprises: receiving a profile package, preferably a segmented bound profile package, from a subscription server, wherein the profile package includes a plurality of elements of which a part is attributed to a profile-specific content and another part is attributed to a profile-generic content; and installing the profile package, wherein: analyzing the elements of the profile-generic content; if the profile-generic content includes an element that is new to a list comprising a collection of distinct elements of the profile-generic content, updating the list; and storing, for each element of the profile-generic content, only the respective identifier in a storage unit of the secure element.

In a further aspect of the disclosure, a system comprising a subscription server and a terminal device is provided. The terminal device comprises a secure element according to an aspect of the disclosure. The subscription server is configured to prepare and provide a profile package, preferably a bound profile package, to the terminal device and/or the secure element. The terminal device and/or the secure element is configured to segment the received profile package. The secure element is configured to: decode the segmented profile package, update the list comprising a collection of distinct elements of the profile-generic content, and store, for each element of the profile-generic content, only the respective identifier in the storage unit.

In a further aspect of the disclosure, a computer-readable medium is provided. The computer-readable medium comprises instructions, which when executed by a processing unit of a secure element, preferably according an aspect of the disclosure, cause the processing unit to execute the method according to an aspect of the disclosure.

The gist of the invention is that storage capacity in the storage unit may be saved by storing only identifiers of the elements of the profile-generic content instead of the respective elements themselves and including a list comprising a collection of distinct elements of the profile-related content. As such, if two or more subscription profiles share at least partially the same elements in their respective profile-generic content, this de-duplication of elements over the two or more subscription profiles can save considerable storage capacity. Typical elements that are profile-generic in subscription profiles relate to elements for application loading and installation, which may include framework-related packages such as Java Card^{™} packages. These elements may have sizes of several kilobytes, while their identifier, e. g., their hash value, as a size of a few bytes. Accordingly, per each element in the profile-generic content of a subscription profile (or the corresponding profile package), memory requirements maybe reduced by a factor of about 1000.

The invention does not touch on the preparation and/or delivery of the profile package data. That is, the same package data preparation and download procedure may be used as e. g. specified in the norms SGP.22 or SGP.32. Instead, the focus of the invention is on the internal storage of the profiles themselves. The inventors realized that these profiles usually include different elements, or sometimes called packages, while even if the profiles are different, these profiles may share certain similarities, like, for instance, use a same package.

The secure element, the method and/or the system according to any of the above aspects may comprise one or more of the following features:
The profile-generic content does not need to be identical throughout the subscription profiles stored in the storage unit. At least one element may be identical in at least two subscription profiles to be considered as profile-generic content. The subscription profiles may be ordered by different network entities.

Nevertheless, each subscription profile typically includes elements that may be attributed to the profile-generic content. An element may be profile-generic with respect to the profiles installed in the secure elements and/or on an absolute scale, i. e., with respect to a large number of profile packages generated by the subscription server. The profile-specific content may include elements related to authentication and/or credentials.

Each of the at least two subscription profiles may comprise a plurality of first segments, in which the profile-specific content may be stored, and a plurality of second segments, in each of which the identifier of a respective element may be stored.

The identifier may comprise or be a hash value of the element. The identifier may represent a reference to the respective element. Whenever elements of the profile-generic content need to be accessed during the lifecycle of an installed profile, the access may be routed via the identifier, i. e., the identifier may be used to provide access to the respective element stored in the list. The elements of the profile-generic content may include Java Card^{™} packages.

The list comprising a collection of distinct elements of the profile-generic content may be managed by a service of the secure element, such as the Profile Package Interpreter. The Profile Package Interpreter may be an operating system service of the secure element that translates the profile package data as defined in the norm TCA - eUICC Profile Package: Interoperable Format Technical Specification (Version 3.3.1) into an installed Profile using the specific internal format of the target eUICC.

The profile package may be a Full Profile Package, i. e., a profile package that is, e. g., unlike the IoT Minimal Profile Package, not optimized for small network bandwidth.

The secure element may comprise or be a tamper-resistant element (TRE).

The storage unit of the secure element may store each profile in a specific data structure, e. g., as provided by an issuer security domain profile (ISD-P). The ISD-P is the on-card representative of the SM-DP+ and is a secure container (Security Domain) for the hosting of a profile. The ISD-P may be used for the profile download and installation in collaboration with the Profile Package Interpreter for the decoding/interpretation of the received profile package. In one embodiment, an ISD-P may host a unique profile.

The processing unit of the secure element may include an issuer security domain root (ISD-R). The ISD-R is responsible for the creation of new ISD-Ps and lifecycle management of all ISD-Ps.

The ISD-R may collaborate with the Profile Package Interpreter in analysing the profile package and determining, which elements of the profile package belong to the profile-generic content, and which elements thereof are new to the list. The list of a collection of distinct elements of the profile-generic content may be hosted in a dedicated security domain in the storage unit, whose lifecycle may be managed by the ISD-R. This dedicated security domain may be referred to as element container.

The profile-generic content of each of the plurality of subscription profiles may include elements of which only the respective identifier may be stored in the storage unit. Preferably, the respective identifier may be stored in the plurality of second segments of the respective subscription profile.

The processing unit may be configured, upon enabling a subscription profile, to replace the identifier of an element by the respective element of the profile-generic content of the to be enabled or enabled subscription profile in the storage unit. This feature has the advantage that the enabled profile is hosted in a conventional way such that profile content management (PCM), e. g. based on the Profile Content Manager Platform remains supported as specified in the norms SGP.22 or SGP.32.

The processing unit may be further configured to: receive a profile package, preferably a segmented bound profile package, from a subscription server, install the profile package, wherein: analyze the elements of the profile-generic content, if the profile-generic content includes an element that is new to the list, update the list, and store, for each element of the profile-generic content, only the respective identifier in the storage unit.

In case the profile-generic content includes an element that is already contained in the list, the identifier of the element may be stored in the data structure of the respective profile, e. g., the ISD-P, wherein the element itself may be discarded.

In case a profile is to be deleted from the storage unit of the secure element, the data structure of the profile is removed, i. e., all elements of the profile-specific content and all identifiers related to the profile-generic content are removed. The elements of the identifiers that are to be deleted, however, may remain stored in the list or the element container. If the identifier of an element stored in the list or element container is not stored in any of the installed profiles anymore, this element may be also removed.

The subscription server may be an enhanced Subscription Manager Data Preparator (SM-DP+) as specified by the norm SGP. 21 or SCP.22.

Installing the profile package may further include: decoding all elements of the profile package, classifying the elements of the profile package into the profile-specific content or the profile-generic content, and translating the elements of the profile-specific content, and storing the translated elements of the profile-specific content in the storage unit.

The method may further comprise: enabling a subscription profile installed in the secure element, wherein replacing the identifier of an element by the respective element of the profile- generic content of the subscription profile in the storage unit; and/or disabling a subscription profile installed in the secure element, wherein replacing an element of the profile-generic content of the subscription profile by the identifier of the respective element in the storage unit.

The profile-generic content may be predetermined.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The SE can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

In one embodiment, the SE can be operable by means of a terminal device, whereby the SE in this embodiment is self-sufficient except for supply signals such as supply voltage, clock, reset, etc. Then the SE may have an interface (data interface, communication interface) for communication with the terminal device, into which the SE may be inserted ready for operation. This communication preferably takes place via a connection protocol, in particular a protocol in accordance with the ETSI TS 102 221 or ISO-7816 standard.

Provided is further a terminal device that is adapted to communicate securely over a communication network, preferably mobile communication network. The terminal device comprises a secure element according to an aspect of the disclosure, and a communication interface which is adapted to communicate via the communication network.

Various aspects of the invention are further explained with respect to the drawings. The drawings are not to be regarded as true to scale, and individual elements of the drawings may be shown in exaggeratedly large or exaggeratedly simplified form.
Fig. 1 shows an exemplary embodiment of a secure element according to prior art.
Fig. 2 shows an exemplary embodiment of a secure element according to an aspect of the invention.
Fig. 3 shows an exemplary embodiment of a system according to an aspect of the invention.
Fig. 4 shows an exemplary flow diagram of a method according an aspect of the invention.

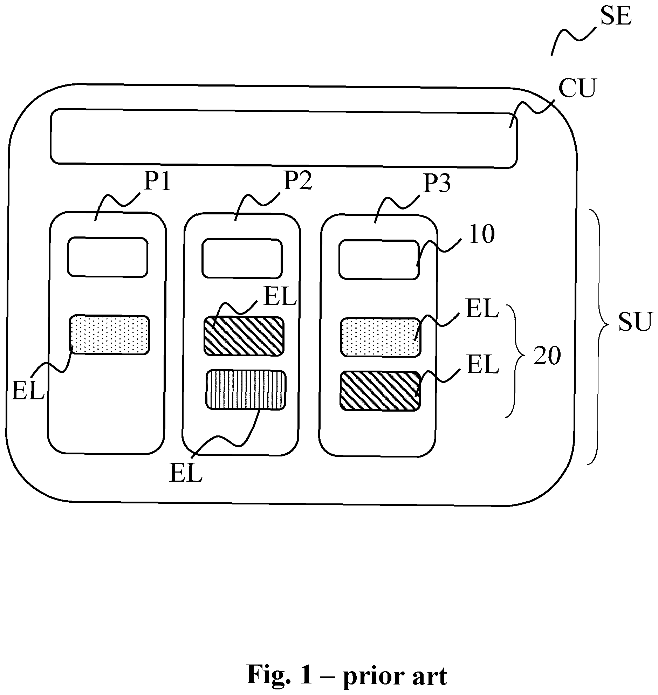

In prior art, the storage of installed profiles in the secure element is implemented as depicted in Fig. 1. Each time a new profile is to be installed, the respective profile package data is downloaded, segmented, interpreted and stored in the storage unit.

In the example of Fig. 1, three profiles P1, P2, P3 are installed in the storage unit SU of the secure element SE. Each profile P1, P2, P3 includes a profile-specific content 10 and a profile-generic content 20. The profile-generic content 20 of each profile P1, P2, P3 includes one or more elements EL. The profile-generic content 20 of the first profile P1 may include a first element. The profile-generic content 20 of the second profile P2 may include a second element and a third element. The profile-generic content 20 of the third profile P3 may include a first element and a second element. The profiles P1, P2, P3 may be managed by a control unit CU, in particular an ISD-R. In this example, the first element and the second element are stored twice in the storage unit as these elements EL are used by two distinct profiles.

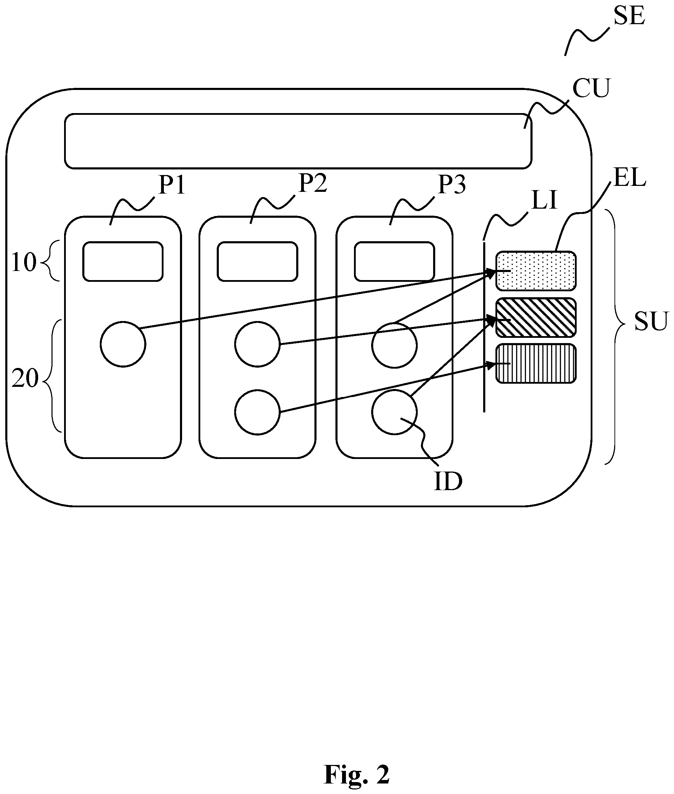

In Fig. 2, an exemplary embodiment of a secure element SE according to an aspect of the invention is shown. The example of Fig. 2 is based on the example of Fig. 1 in that the same profile packages have been downloaded to install profiles P1, P2, P3. However, the internal storage of the profiles is modified according to an aspect of the invention.

Upon installation of the downloaded profile package data, the processing unit CU (or control unit) of the secure element SE is configured to analyze the received profile package (not shown). In particular, the processing unit CU may be configured to classify the elements of the profile package into a profile-specific content 10 and a profile-generic content 20, if such attribution is not predetermined.

The processing unit CU may store a list LI comprising a collection of distinct elements EL of the profile-generic content 20 in the storage unit SU and manage this list LI. The processing unit CU may determine which elements EL of the profile-generic content 20 is already stored in the list LI, e. g., based on a comparison of hash values of the elements EL. If an element EL of the profile-generic content 20 is new to the list LI, this element EL is added to the list LI, i. e., this element may be stored in a security domain hosting the list LI. In the respective profile, e. g., in the ISD-P hosting the profile, only the identifiers ID of the elements EL of the profile-generic content 20 are stored. These identifiers are symbolized as circles in Fig. 2. These identifiers ID may represent a reference to the respective element EL. To facilitate the generation of such reference, the hash value of the respective element EL may be used as identifier ID.

In the secure element SE of Fig. 2, the same profiles P1, P2, P3 have been installed, however, much less storage capacity has been used. Only three elements EL of the profile-generic content are stored in the list LI as compared to the five elements EL of the profile-generic content stored in the secure element SE of Fig. 1.

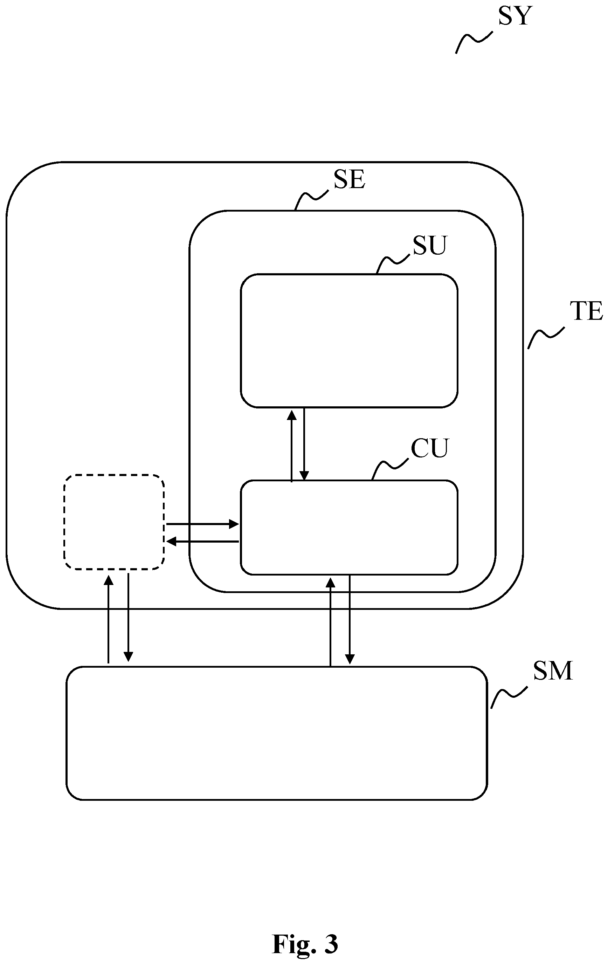

Fig. 3 shows an exemplary embodiment of a system SY according to an aspect of the invention. The system SY includes a terminal device TE and a subscription server SM. The subscription server SM is configured to prepare and provide profile package data, preferably a bound profile package.

The terminal device TE hosts a secure element SE according to an aspect of the disclosure, e. g., as described with respect to Fig. 2. The system SY may include an interface by which the processing unit CU of the secure element SE may communicate with the subscription server SM, e. g., to download a profile package. Optionally, the terminal device may include a local profile assistant (LPA), which may download the profile package and provide the profile package to the processing unit CU for installation and/or decoding.

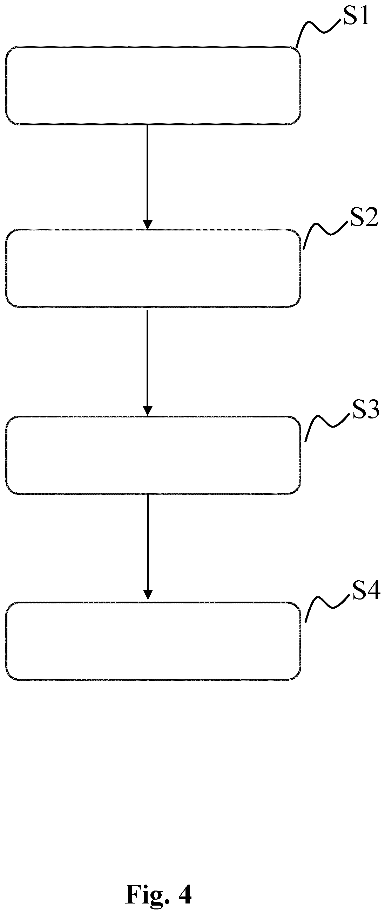

Fig. 4 shows an exemplary flow diagram of a method according an aspect of the invention.

In a first step S1, receiving a profile package, preferably a bound profile package, from a subscription server. The profile package includes a plurality of elements EL of which a part is attributed to, preferably classified as, a profile-specific content 10 and another part is attributed to, preferably classified as, a profile-generic content 20. A local profile assistant (LPA) may further segment the bound profile package and provide the segmented bound profile package to the processing unit CU of the secure element SE.

Subsequently the profile package is installed in the secure element SE, according to the following three steps, of which the third step S3 and the fourth step S4 may be executed in any order and/or concurrently.

Installing the profile package includes a second step S2, by which the elements of the profile-generic content are analyzed.

Installing the profile package includes a third step S3, by which it is determined whether the profile-generic content 20 includes an element EL that is new to a list LI comprising a collection of distinct elements EL of the profile-generic content 20. If this determination is true, the third step S3 further includes updating the list.

Installing the profile package includes a fourth step S4, by which for each element EL of the profile-generic content 20 only the respective identifier ID is stored in a storage unit CU of the secure element SE.

## Claims

1. A secure element (SE) for communication securely over a communication network, the secure element comprising:
a storage unit (SU), in which
a plurality of subscription profiles (P1, P2, P3), each comprising a profile-specific content (10) and a profile-generic content (20), and
a list (LI) comprising a collection of distinct elements (EL) of the profile-generic content (20) are stored, wherein:
each element (EL) includes an identifier (ID), and
the profile-generic content (20) of each of at least two subscription profiles (P1, P2, P3) stored in the storage unit (SU) includes elements (EL) of which only the respective identifier (ID) is stored in the storage unit (SU), and
a processing unit (CU) which is configured to enable at least one of the plurality of subscription profiles (P1, P2, P3) and establish a secure connection based on the at least one enabled subscription profile (P1, P2, P3).

2. The secure element (SE) according to claim 1, wherein each of the at least two subscription profiles (P1, P2, P3) comprises a plurality of first segments, in which the profile-specific content (10) is stored, and a plurality of second segments, in each of which the identifier (ID) of a respective element (EL) is stored.

3. The secure element (SE) according to claim 1 or 2, wherein the identifier (ID) comprises or is a hash value of the element (EL).

4. The secure element (SE) according to any of the preceding claims, wherein the profile-generic content (20) of each of the plurality of subscription profiles (P1, P2, P3) includes elements (EL) of which only the respective identifier (ID) is stored in the storage unit (SU), preferably in the plurality of second segments of the respective subscription profile (P1, P2, P3).

5. The secure element (SE) according to any of the preceding claims, wherein the processing unit (CU) is configured, upon enabling a subscription profile (P1, P2, P3), to replace the identifier (ID) of an element (EL) by the respective element (EL) of the profile-generic content (20) of the to be enabled or enabled subscription profile (P1, P2, P3) in the storage unit (SU).

6. The secure element (SE) according to any of the preceding claims, wherein the processing unit (CU) is further configured to:
receive a profile package, preferably a segmented bound profile package, from a subscription server (SM),
install the profile package, wherein:
analyze the elements of the profile-generic content,
if the profile-generic content (20) includes an element (EL) that is new to the list (LI), update the list (LI), and
store, for each element (EL) of the profile-generic content (20), only the respective identifier (ID) in the storage unit (SU).

7. Method of installing a subscription profile (P1, P2, P3) in a secure element (SE), the method comprises:
receiving a profile package, preferably a bound profile package, from a subscription server (SM), wherein the profile package includes a plurality of elements (EL) of which a part is attributed to a profile-specific content (10) and another part is attributed to a profile-generic content (20); and
installing the profile package, wherein:
analyzing the elements (EL) of the profile-generic content (20);
if the profile-generic content (20) includes an element (EL) that is new to a list (LI) comprising a collection of distinct elements (EL) of the profile-generic content (20), updating the list (LI); and
storing, for each element (EL) of the profile-generic content (20), only the respective identifier (ID) in a storage unit (SU) of the secure element (SE).

8. Method according to claim 7, wherein installing the profile package further includes:
decoding all elements (EL) of the profile package,
classifying the elements (EL) of the profile package into the profile-specific content (10) or the profile-generic content (20),
translating the elements (EL) of the profile-specific content (10), and
storing the translated elements (EL) of the profile-specific content (10) in the storage unit (SU).

9. Method according to claim 7 or 8, further comprising:
enabling a subscription profile (P1, P2, P3) installed in the secure element (SE), wherein replacing the identifier (ID) of an element (EL) by the respective element (EL) of the profile-generic content (20) of the subscription profile (P1, P2, P3) in the storage unit (SU); and/or
disabling a subscription profile (P1, P2, P3) installed in the secure element (SE), wherein replacing an element (EL) of the profile-generic content (20) of the subscription profile (P1, P2, P3) by the identifier (ID) of the respective element (EL) in the storage unit (SU).

10. The method according to any of claim 7-9, wherein the profile-generic content (20) is predetermined.

11. System (SY), comprising:
a subscription server (SM); and
a terminal device (TE), wherein the terminal device (TE) comprises a secure element (SE), preferably according to any of the preceding claims 1 to 6, wherein:
the subscription server (SM) is configured to prepare and provide a profile package, preferably a bound profile package, to the terminal device (TE) and/or the secure element (SE);
the terminal device (TE) and/or the secure element (SE) is configured to segment the received profile package; and
the secure element (SE) is configured to:
decode the segmented profile package,
update the list (LI) comprising a collection of distinct elements (EL) of the profile-generic content (20), and
store, for each element (EL) of the profile-generic content (20), only the respective identifier (ID) in the storage unit (SU).

12. Computer-readable medium comprising instructions, which when executed by a processing unit (CU) of a secure element (SE), preferably according to any of the preceding claims 1-6, cause the processing unit (CU) to execute the method according to any of the preceding claims 7 to 10.

## Amended claims

### Amended claims in accordance with Rule 137(2) EPC.

1. A secure element (SE) for communication securely over a communication network, the secure element comprising:
a storage unit (SU), in which
a plurality of subscription profiles (P1, P2, P3), each comprising a profile-specific content (10) and a profile-generic content (20), and
a list (LI) comprising a collection of distinct elements (EL) of the profile-generic content (20) are stored, wherein:
each element (EL) includes an identifier (ID), and
the profile-generic content (20) of each of at least two subscription profiles (P1, P2, P3) stored in the storage unit (SU) includes elements (EL) of which only the respective identifier (ID) is stored in the storage unit (SU), and
a processing unit (CU) which is configured to:
receive a profile package from a subscription server (SM),
install the profile package, wherein:
analyze the elements of the profile-generic content,
if the profile-generic content (20) includes an element (EL) that is new to the list (LI), update the list (LI), and
store, for each element (EL) of the profile-generic content (20), only the respective identifier (ID) in the storage unit (SU), and
enable at least one of the plurality of subscription profiles (P1, P2, P3) and establish a secure connection based on the at least one enabled subscription profile (P1, P2, P3).

2. The secure element (SE) according to claim 1, wherein each of the at least two subscription profiles (P1, P2, P3) comprises a plurality of first segments, in which the profile-specific content (10) is stored, and a plurality of second segments, in each of which the identifier (ID) of a respective element (EL) is stored.

3. The secure element (SE) according to claim 1 or 2, wherein the identifier (ID) comprises or is a hash value of the element (EL).

4. The secure element (SE) according to any of the preceding claims, wherein the profile-generic content (20) of each of the plurality of subscription profiles (P1, P2, P3) includes elements (EL) of which only the respective identifier (ID) is stored in the storage unit (SU), preferably in the plurality of second segments of the respective subscription profile (P1, P2, P3).

5. The secure element (SE) according to any of the preceding claims, wherein the processing unit (CU) is configured, upon enabling a subscription profile (P1, P2, P3), to replace the identifier (ID) of an element (EL) by the respective element (EL) of the profile-generic content (20) of the to be enabled or enabled subscription profile (P1, P2, P3) in the storage unit (SU).

6. Method of installing a subscription profile (P1, P2, P3) in a secure element (SE), the method comprises:
receiving a profile package from a subscription server (SM), wherein the profile package includes a plurality of elements (EL) of which a part is attributed to a profile-specific content (10) and another part is attributed to a profile-generic content (20), wherein each element (EL) includes an identifier (ID); and
installing the profile package, wherein:
analyzing the elements (EL) of the profile-generic content (20);
if the profile-generic content (20) includes an element (EL) that is new to a list (LI) comprising a collection of distinct elements (EL) of the profile-generic content (20), updating the list (LI); and
storing, for each element (EL) of the profile-generic content (20), only the respective identifier (ID) in a storage unit (SU) of the secure element (SE).

7. Method according to claim 6, wherein installing the profile package further includes:
decoding all elements (EL) of the profile package,
classifying the elements (EL) of the profile package into the profile-specific content (10) or the profile-generic content (20),
translating the elements (EL) of the profile-specific content (10), and
storing the translated elements (EL) of the profile-specific content (10) in the storage unit (SU).

8. Method according to claim 6 or 7, further comprising:
enabling a subscription profile (P1, P2, P3) installed in the secure element (SE), wherein replacing the identifier (ID) of an element (EL) by the respective element (EL) of the profile-generic content (20) of the subscription profile (P1, P2, P3) in the storage unit (SU); and/or
disabling a subscription profile (P1, P2, P3) installed in the secure element (SE), wherein replacing an element (EL) of the profile-generic content (20) of the subscription profile (P1, P2, P3) by the identifier (ID) of the respective element (EL) in the storage unit (SU).

9. The method according to any of claim 6-8, wherein the profile-generic content (20) is predetermined.

10. The secure element (SE) according to any of the preceding claims, wherein the profile package is a segmented bound profile package

11. System (SY), comprising:
a subscription server (SM); and
a terminal device (TE), wherein the terminal device (TE) comprises a secure element (SE), preferably according to any of the preceding claims 1 to 5, wherein:
the subscription server (SM) is configured to prepare and provide a profile package, preferably a bound profile package, to the terminal device (TE) and/or the secure element (SE);
the terminal device (TE) and/or the secure element (SE) is configured to segment the received profile package; and
the secure element (SE) is configured to:
decode the segmented profile package,
update the list (LI) comprising a collection of distinct elements (EL) of the profile-generic content (20), and
store, for each element (EL) of the profile-generic content (20), only the respective identifier (ID) in the storage unit (SU).

12. Computer-readable medium comprising instructions, which when executed by a processing unit (CU) of a secure element (SE), preferably according to any of the preceding claims 1-5, cause the processing unit (CU) to execute the method according to any of the preceding claims 6 to 10.
